# EUROPÄISCHE PATENTANMELDUNG

(11) **EP 4 201 562 A1**
(43) Veröffentlichungstag der Anmeldung: **28.06.2023**
(21) Anmeldenummer: 22214831.4
(22) Anmeldetag: 20.12.2022
(51) Int. Cl.: B23B 51/06

(54) **ZERSPANUNGSWERKZEUG ZUR HYDROSTATISCHEN LAGERUNG**

(30) Priorität: 21.12.2021 DE 102021133961
(71) Anmelder: Gühring KG, 72458 Albstadt (DE)
(72) Erfinder: Sagr, Andreas, 72458 Albstadt (DE); Hartmann, Peter, 72479 Straßberg (DE); Hering, Michael, 95448 Bayreuth (DE)
(74) Vertreter: Gleim, Christian Ragnar

(57) **Zusammenfassung**

Zerspanungswerkzeug 0 zur hydrostatischen Lagerung umfassend einen Werkzeuggrundkörper 01 mit mindestens einem in dem Werkzeuggrundkörper 01 angeordneten Fluidkanal 02, welcher Fluidkanal 02 mit mindestens einer Fluidkanalöffnung 02a an einer Werkzeuggrundkörperaußenwand 03 angeordnet ist; und mindestens eine Führungsleiste 1, welche über eine Kontaktfläche 22 derart an der Werkzeuggrundkörperaußenwand 03 angeordnet ist, um mit der mindestens einen Fluidkanalöffnung 02a verbunden zu sein, und wobei die Führungsleiste 1 eine Reibfläche 21 umfasst, in der ein Austrittsabschnitt 4 angeordnet ist, und wobei innerhalb der Führungsleiste 1 ein Seitenkanal 31 mit einem ersten Seitenkanalöffnungsabschnitt 31a und einem zweiten Seitenkanalöffnungsabschnitt 31b angeordnet ist, wobei der erste Seitenkanalöffnungsabschnitt 31a derart in der Kontaktfläche 22 angeordnet ist, um mit der Fluidkanalöffnung 02a verbunden zu sein, und wobei der zweite Seitenkanalöffnungsabschnitt 31b an einem Seitenabschnitt 4a des Austrittsabschnitts 4 angeordnet ist.

## Beschreibung

Die Erfindung betrifft ein Zerspanungswerkzeug zur hydrostatischen Lagerung gemäß dem unabhängigen Anspruch.

Zerspanungswerkzeuge werden eingesetzt, um ein Material bei einem Werkstück spanend abzutragen. Dabei ist es oft unerlässlich den Bearbeitungsprozess unter Zuführung eines Fluids zur Kühlung und/oder zur Schmierung durchzuführen, um die bei der Bearbeitung entstehende Reibung gering zu halten, beziehungsweise das Zerspanungswerkzeug hydrostatisch zu lagern. Andernfalls kann die auftretende Reibung sowohl den Bearbeitungsprozess des Werkstücks nachteilig beeinflussen und/oder erhöhter Verschleiß auftreten.

Zerspanungswerkzeuge, bei denen die Zuführung von Kühlmittel und/oder Schmiermittel zur hydrostatischen Lagerung besonders wichtig sind, sind beispielsweise Tieflochbohrer. Dabei kommen Führungsleisten regelmäßig zum Einsatz, welche an dem Bohrerschaft angeordnet sind, um diesen während des Bohrvorgangs entlang seines Umfangs durch das Bohrloch zu führen und zu stützen.

Typischerweise sind die Führungsleisten dabei am Bohrerkopf an einer gegenüberliegenden Seite des Schneidenträgers angeschraubt oder geklemmt. Da die Führungsleisten beim Bearbeiten des Werkstücks in direktem Reib-Kontakt mit dem Werkstück stehen, kann dabei eine enorme Reibung entstehen, welche sowohl das Bohren, als auch den Bohrer und das Werkstück negativ beeinflussen kann.

Ein Nachteil von Führungsleisten aus dem Stand der Technik ist, dass die Kontaktfläche der Führungsleisten mit dem Werkstück während des Bohrens nicht ausreichend durch ein Fluid geschmiert wird. Dieser Nachteil resultiert daraus, dass bei konventionellen Zerspanungswerkzeugen das Fluid über im Werkzeug liegende Kanäle lediglich an den Kopf des Zerspanungswerkzeugs geleitet wird, wo es austritt und dann äußerlich zu den Führungsleisten gelangt. Das Fluid derart zu den Führungsleisten zu bringen ist jedoch ineffizient.

Es sind Führungsleisten bekannt, bei denen das Fluid direkt über einen innenliegenden Kanal an die Reibfläche gelangt. Bei diesen Führungsleisten aus dem Stand der Technik ist die Position des Austrittsabschnitts des Kanals, an dem das Fluid reibflächenseitig austritt, nicht optimiert, insbesondere im Hinblick auf die Bewegung des Werkzeugs.

Ferner sind aus dem Stand der Technik die DE 10 2020 121 096 A1, die WO 2010/ 027 566 A1, die CN 1 10 860 724 A und die JP 2014- 30 854 A bekannt.

Es ist die Aufgabe der vorliegenden Erfindung die Nachteile aus dem Stand der Technik zu beseitigen und insbesondere ein Zerspanungswerkzeug bereitzustellen, welches zur hydrostatischen Lagerung geeignet ist und mindestens eine Führungsleiste aufweist, mit der Fluid optimal an eine Reibfläche der Führungsleiste geleitet wird.

Diese Aufgabe wird durch den Gegenstand des unabhängigen Anspruchs gelöst. Vorteilhafte Varianten bilden den Gegenstand der jeweiligen Unteransprüche.

Die Erfindung umfasst ein Zerspanungswerkzeug zur hydrostatischen Lagerung umfassend:
- einen Werkzeuggrundkörper mit mindestens einem in dem Werkzeuggrundkörper angeordneten Fluidkanal, wobei der Fluidkanal mit mindestens einer Fluidkanalöffnung an einer Werkzeuggrundkörperaußenwand angeordnet ist; und
- mindestens eine Führungsleiste, die über eine Kontaktfläche derart an der Werkzeuggrundkörperaußenwand angeordnet ist, um mit der mindestens einen Fluidkanalöffnung verbunden zu sein. Dabei umfasst die Führungsleiste eine Reibfläche, in der ein Austrittsabschnitt angeordnet ist. Innerhalb der Führungsleiste ist ein Seitenkanal mit einem ersten Seitenkanalöffnungsabschnitt und einem zweiten Seitenkanalöffnungsabschnitt angeordnet. Dabei ist der erste Seitenkanalöffnungsabschnitt derart in der Kontaktfläche angeordnet, um mit der Fluidkanalöffnung verbunden zu sein. Der zweite Seitenkanalöffnungsabschnitt ist an einem Seitenabschnitt des Austrittsabschnitts angeordnet.

Indem der Seitenkanal durch den ersten Seitenkanalöffnungsabschnitt mit der Fluidkanalöffnung verbunden ist und durch den zweiten Seitenkanalöffnungsabschnitt mit dem Austrittsabschnitt verbunden ist, kann Kühlmittel und/oder Schmiermittel, welches durch den Fluidkanal bereitgestellt wird, mittels des Seitenkanals an den Austrittsabschnitt und damit an die Reibfläche gelangen.

Dadurch, dass der zweite Seitenkanalöffnungsabschnitt an einem Seitenabschnitt des Austrittsabschnitts angeordnet ist, wird eine optimierte Kühlmittel- und/oder Schmiermittelzufuhr zum Austrittsabschnitt und damit an die Reibfläche erzielt. Der Austrittsabschnitt kann beispielsweise länglich ausgebildet sein und der Seitenabschnitt durch einen der Endabschnitte des länglich ausgebildeten Austrittsabschnitts gebildet sein.

Nach einem bevorzugten Aspekt nimmt der Seitenabschnitt zwischen 10 % und 50 % des Austrittsabschnitts ein. Hierdurch lässt sich die Strömungsgeschwindigkeit und der Druck der Kühlmittel- und/oder Schmiermittelzufuhr in den Austrittsabschnitt einstellen.

Nach einem besonders bevorzugten Aspekt ist der Seitenabschnitt an einer Randkontur des Austrittsabschnitts angeordnet. Indem der Seitenabschnitt an einer Randkontur des Austrittsabschnitts angeordnet ist, kann eine effektive und direktere Kühlmittel- und/oder Schmiermittelzufuhr an die Reibfläche erfolgen.

Nach einem weiteren bevorzugten Aspekt steht der Seitenkanal in einem Winkel in einem Bereich zwischen 30° und 60° zur Reibfläche.

Nach einem vorteilhaften Aspekt ist innerhalb der Führungsleiste ein Mittelkanal mit einem ersten Mittelkanalöffnungsabschnitt und einem zweiten Mittelkanalöffnungsabschnitt angeordnet. Dabei ist der erste Mittelkanalöffnungsabschnitt derart in der Kontaktfläche angeordnet, um mit der Fluidkanalöffnung verbunden zu sein. Der zweite Mittelkanalöffnungsabschnitt ist an einem Mittelabschnitt des Austrittsabschnitts angeordnet.

Der Mittelkanal stellt neben dem Seitenkanal einen weiteren Kanal zur Kühlmittel- und/oder Schmiermittelzufuhr an den Austrittsabschnitt und damit an die Reibfläche dar. Hierdurch kann eine gleichmäßigere Verteilung der Kühlmittel- und/oder Schmiermittelzufuhr erfolgen.

Nach einem besonders vorteilhaften Aspekt nimmt der Mittelabschnitt zwischen 10 % und 50 % des Austrittsabschnitts ein. Hierdurch lässt sich die Strömungsgeschwindigkeit und der Druck der Kühlmittel- und/oder Schmiermittelzufuhr in den Austrittsabschnitt einstellen.

Nach einem weiteren vorteilhaften Aspekt sind der erste Seitenkanalöffnungsabschnitt und der erste Mittelkanalöffnungsabschnitt identisch. Dies ermöglicht, dass der erste Seitenkanalöffnungsabschnitt und der erste Mittelkanalöffnungsabschnitt mit derselben Fluidkanalöffnung verbunden sind.

Nach einem bevorzugten Aspekt ist der Austrittsabschnitt derart ausgebildet, um zwischen 10 % und 90 % der Reibfläche auszunehmen. Der Anteil der Reibfläche, der durch die Ausbildung des Austrittsabschnitts ausgenommen wird, kann dabei derart gewählt sein, sodass die Reibfläche ausreichende Führung bei einem zu bearbeitenden Werkstück aufbringt und gleichzeitig genügend Fluid durch den Austrittsabschnitt zur hydrostatischen Lagerung und Kühlung an die Reibfläche gelangt.

Nach einem weiteren bevorzugten Aspekt ist die Reibfläche derart ausgebildet ist, um den Austrittsabschnitt vollständig zu umranden. Dies gewährleistet eine stabile Führung des Zerspanungswerkzeugs durch die Führungsleisten.

Nach einem besonders bevorzugten Aspekt weist der Austrittsabschnitt eine sich in Richtung der Reibfläche vergrößernde Querschnittsfläche auf. Durch die sich in Richtung der Reibfläche vergrößernde Querschnittsfläche des Austrittsabschnitts kann das Fluid besser an die Reibfläche gelangen.

Nach einem vorteilhaften Aspekt weist der Austrittsabschnitt eine Form entsprechend einem zur Reibfläche hin geöffneten Trog auf. Diese Form weist dabei im Querschnitt eine U-Form oder V-Form auf.

Nach einem weiteren vorteilhaften Aspekt weist der Austrittsabschnitt in zumindest einem Querschnitt eine kreissegment-förmige Querschnittskontur auf. Ein solcher Austrittsabschnitt kann über ein Einstechverfahren ausgebildet werden.

Nach einem besonders vorteilhaften Aspekt umfasst der Austrittsabschnitt Wandabschnitte, die einen Winkel zwischen 10° und 90° zur Reibfläche aufweisen. Dabei können die Wandabschnitte jeweils unterschiedliche Winkel zur Reibfläche aufweisen. Die Einstellung des Winkels zwischen den Wandabschnitten und der Reibfläche wird derart gewählt, um einen optimalen Fluss des Fluids aus dem Austrittsabschnitt zu der Reibfläche zu gewährleisten.

Nach einem bevorzugten Aspekt umfasst die Führungsleiste polykristallinen Diamant (PKD) und/oder kubisch kristallines Bornitrid (CBN) und/oder Vollhartmetall (VHM) und/oder Cermet. Die Führungsleiste kann dabei vollständig aus polykristallinem Diamant (PKD) und/oder kubisch kristallinem Bornitrid (CBN) und/oder Vollhartmetall (VHM) und/oder Cermet sein oder eine Beschichtung aus polykristallinem Diamant (PKD) und/oder kubisch kristallinem Bornitrid (CBN) und/oder Vollhartmetall (VHM) und/oder Cermet umfassen.

Die Erfindung wird im Folgenden anhand der in den Zeichnungen dargestellten Beispiele zusätzlich erläutert.

Es zeigen:
- Fig. 1a: eine perspektivische Darstellung einer Führungsleiste mit einem Seitenkanal;
- Fig. 1b: eine Schnittansicht der Führungsleiste mit einem Seitenkanal aus Fig. 1a;
- Fig. 2: eine perspektivische Darstellung einer Führungsleiste mit einem Seitenkanal und einem Mittelkanal; und
- Fig. 3: eine Schnittansicht durch ein Zerspanungswerkzeug mit einer Führungsleiste mit einem Seitenkanal und einem Mittelkanal aus Fig. 2 angeordnet an einem Zerspanungswerkzeug.

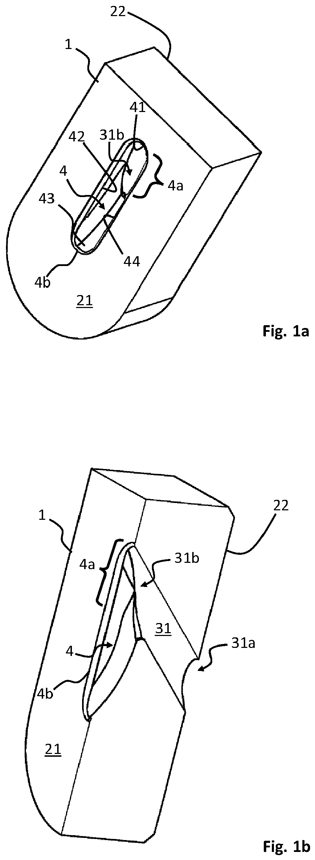

**Fig. 1a** und **Fig. 1b** werden im Folgenden zusammen beschrieben. Sie zeigen eine Führungsleiste 1, welche vollständig aus polykristallinen Diamant (PKD) ist mit einem Seitenkanal 31.

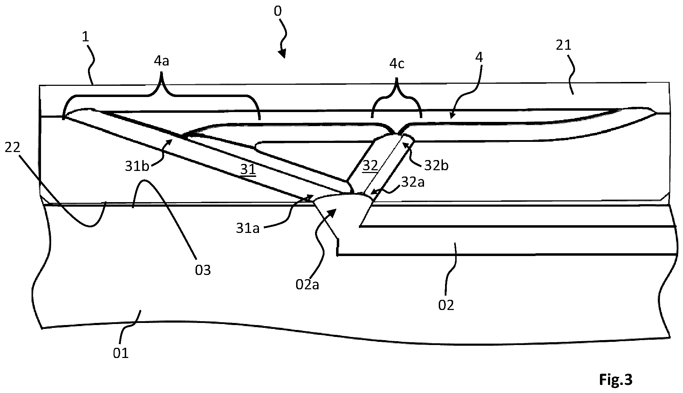

Die Führungsleiste 1 umfasst eine Reibfläche 21, in der ein Austrittsabschnitt 4 angeordnet ist und eine Kontaktfläche 22 zur Anordnung an eine Werkzeuggrundkörperaußenwand (in Fig. 3 gezeigt).

Der Seitenkanal 31 ist mit in einem Winkel von 45° zur Reibfläche 21 stehend innerhalb der Führungsleiste 1 angeordnet und umfasst einen ersten Seitenkanalöffnungsabschnitt 31a und einen zweiten Seitenkanalöffnungsabschnitt 31b. Dabei ist der erste Seitenkanalöffnungsabschnitt 31a in der Kontaktfläche 22 angeordnet. Hier tritt Kühlmittel und/oder Schmiermittel in den Seitenkanal 31 ein. Der zweite Seitenkanalöffnungsabschnitt 31b ist an einem Seitenabschnitt 4a des Austrittsabschnitts 4 angeordnet. Hier tritt Fluid aus dem Seitenkanal 31 aus. Somit gelangt Fluid zur Kühlung und/oder zur Schmierung mittels des Seitenkanals 31 an den Austrittsabschnitt 4 und wird an der Reibfläche 21 verteilt.

Durch die direkte Führung des Fluids durch den Seitenkanal 31 kann das Fluid zur hydrostatischen Lagerung und/oder Kühlung besonders effektiv zwischen die Reibfläche 21 und das zu bearbeitende Werkstück gelangen.

Dadurch, dass der zweite Seitenkanalöffnungsabschnitt 31b an einem Seitenabschnitt 4a des Austrittsabschnitts 4 angeordnet ist, wird eine optimierte Kühlmittel- und/oder Schmiermittelzufuhr zum Austrittsabschnitt 4 und damit an die Reibfläche 21 erzielt. In dem gezeigten Beispiel ist der Austrittsabschnitt 4 länglich ausgebildet und der Seitenabschnitt 4a ist durch einen Endabschnitt des länglich ausgebildeten Austrittsabschnitts 4 gebildet und an einer Randkontur 4b des Austrittsabschnitts 4 angeordnet.

Die Strömungsgeschwindigkeit und der Druck der Fluidzufuhr in den Austrittsabschnitt 4 ist optimal eingestellt, indem der gezeigte Seitenabschnitt 4a 30 % des Austrittsabschnitts 4 einnimmt.

Der Austrittsabschnitt 4 weist eine Form entsprechend einem zur Reibfläche 21 hin geöffneten Trog. Im Querschnitt weist diese Form also eine U-Form auf. Durch diese Form weist der Austrittsabschnitt 4 eine sich in Richtung der Reibfläche 21 vergrößernde Querschnittsfläche auf, wodurch das Fluid besser an die Reibfläche 21 gelangen kann.

Der Austrittsabschnitt 4 umfasst vier Wandabschnitte 41, 42, 43, 44, wobei zwei Wandabschnitte 41, 43 einen Winkel von 40° und zwei Wandabschnitte 42, 44 einen Winkel von 80° zur Reibfläche 21 aufweisen. Die Einstellung des Winkels zwischen den Wandabschnitten 41, 42, 43, 44 und der Reibfläche 21 wird jeweils derart gewählt, um einen optimalen Fluss des Fluids aus dem Austrittsabschnitt 4 zu der Reibfläche 21 zu gewährleisten.

Der Austrittsabschnitt 4 ist derart ausgebildet, um 20 % der Reibfläche 21 auszunehmen. Dieser Anteil der Reibfläche 21, der durch die Ausbildung des Austrittsabschnitts 4 ausgenommen wird, ist derart gewählt, sodass die Reibfläche 21 ausreichende Führung bei einem zu bearbeitenden Werkstück aufbringt und gleichzeitig genügend Fluid durch den Austrittsabschnitt 4 zur hydrostatischen Lagerung und Kühlung an die Reibfläche 21 gelangt.

Für eine gleichmäßige und stabile Führung, welche durch die Führungsleiste 1 erzielt werden soll, ist die gezeigte Reibfläche 21 derart ausgebildet, um den Austrittsabschnitt 4 vollständig zu umranden.

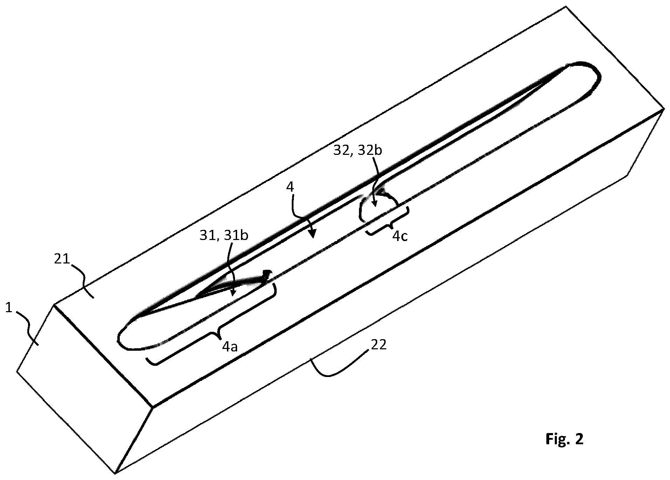

**Fig. 2** zeigt eine perspektivische Darstellung einer Führungsleiste 1 mit einem Seitenkanal 31 und einem Mittelkanal 32. Dabei ist die Führungsleiste 1 vollständig aus polykristallinem Diamant (PKD).

Die Führungsleiste 1 umfasst eine Reibfläche 21, in der ein Austrittsabschnitt 4 angeordnet ist und eine Kontaktfläche 22 zur Anordnung an eine Werkzeuggrundkörperaußenwand (in Fig. 3 gezeigt).

Der Seitenkanal 31 ist mit in einem Winkel von 45° zur Reibfläche 21 stehend innerhalb der Führungsleiste 1 angeordnet und umfasst einen ersten Seitenkanalöffnungsabschnitt (in Fig. 3 gezeigt) und einen zweiten Seitenkanalöffnungsabschnitt 31b. Dabei ist der erste Seitenkanalöffnungsabschnitt (in Fig. 3 gezeigt) in der Kontaktfläche 22 angeordnet. Hier tritt Fluid in den Seitenkanal 31 ein. Der zweite Seitenkanalöffnungsabschnitt 31b ist an einem Seitenabschnitt 4a des Austrittsabschnitts 4 angeordnet. Hier tritt Fluid aus dem Seitenkanal 31 aus. Somit gelangt Fluid zur Kühlung und/oder zur Schmierung mittels des Seitenkanals 31 an den Austrittsabschnitt 4 und wird vornehmlich an einer Seite der Reibfläche 21 verteilt.

Der Mittelkanal 32 bildet einen zweiten Kanal zur Fluidzuführung und ist ebenfalls innerhalb der Führungsleiste 1 angeordnet. Der Mittelkanal 32 umfasst einen ersten Mittelkanalöffnungsabschnitt (in Fig. 3 gezeigt und einen zweiten Mittelkanalöffnungsabschnitt 32b. Dabei ist der erste Mittelkanalöffnungsabschnitt (in Fig. 3 gezeigt) in der Kontaktfläche 22 angeordnet. Hier tritt Fluid in den Mittelkanal 32 ein. Der zweite Mittelkanalöffnungsabschnitt 32b ist an einem Mittelabschnitt 4c des Austrittsabschnitts 4 angeordnet. Hier tritt Fluid aus dem Mittelkanal 32 aus. Durch die Anordnung des Mittelkanals 32 zusätzlich zum Seitenkanal 31 gelangt mehr Fluid zur Kühlung und/oder zur Schmierung an den Austrittsabschnitt 4 und dieses wird gleichmäßiger an der Reibfläche 21 verteilt.

**Fig. 3** zeigt eine Schnittansicht durch ein Zerspanungswerkzeug 0 mit einer Führungsleiste 1 mit einem Seitenkanal 31 und einem Mittelkanal 32 aus Fig. 2. Die Führungsleiste 1 ist an einem Werkzeuggrundkörper 01 angeordnet.

Die Führungsleiste 1 ist derart mit der Kontaktfläche 22 an der Werkzeuggrundkörperaußenwand 03 des Werkzeuggrundkörpers 01 angeordnet, sodass der Seitenkanal 31 und der Mittelkanal 32 mit einem innerhalb des Werkzeuggrundkörpers 01 angeordneten Fluidkanal 02 über die Fluidkanalöffnung 02a fluidgängig verbunden sind. Hierdurch kann über den Fluidkanal 02 ein Fluid zur hydrostatischen Lagerung direkt durch den Seitenkanal 31 und den Mittelkanal 32 zu dem Austrittsabschnitt 4 und damit an die Reibfläche 21 geleitet werden.

Der Seitenkanal 31 ist mit in einem Winkel von 45° zur Reibfläche 21 stehend innerhalb der Führungsleiste 1 angeordnet und umfasst einen ersten Seitenkanalöffnungsabschnitt 31a, welcher identisch zu einem ersten Mittelkanalöffnungsabschnitt 32a des Mittelkanals 32 ist.

Der zweite Seitenkanalöffnungsabschnitt 31b ist an einem Seitenabschnitt 4a des Austrittsabschnitts 4 angeordnet. Hier tritt Kühlmittel und/oder Schmiermittel aus dem Seitenkanal 31 aus. Somit gelangt Fluid mittels des Seitenkanals 31 an den Austrittsabschnitt 4 und wird vornehmlich an einer Seite der Reibfläche 21 verteilt.

Der Mittelkanal 32 bildet einen zweiten Kanal zur Fluidzuführung und ist ebenfalls innerhalb der Führungsleiste 1 in einem Winkel von 25° zur Reibfläche 21 stehend angeordnet. Der zweite Mittelkanalöffnungsabschnitt 32b ist an einem Mittelabschnitt 4c des Austrittsabschnitts 4 angeordnet. Hier tritt Kühlmittel und/oder Schmiermittel aus dem Mittelkanal 32 aus. Durch die Anordnung des Mittelkanals 32 zusätzlich zum Seitenkanal 31 gelangt mehr Fluid an den Austrittsabschnitt 4 und dieses wird gleichmäßiger an der Reibfläche 21 verteilt.

## Patentansprüche

1. Zerspanungswerkzeug (0) zur hydrostatischen Lagerung umfassend:
- einen Werkzeuggrundkörper (01) mit mindestens einem in dem Werkzeuggrundkörper (01) angeordneten Fluidkanal (02), welcher Fluidkanal (02) mit mindestens einer Fluidkanalöffnung (02a) an einer Werkzeuggrundkörperaußenwand (03) angeordnet ist; und
- mindestens eine Führungsleiste (1), welche über eine Kontaktfläche (22) derart an der Werkzeuggrundkörperaußenwand (03) angeordnet ist, um mit der mindestens einen Fluidkanalöffnung (02a) verbunden zu sein, und wobei die Führungsleiste (1) eine Reibfläche (21) umfasst, in der ein Austrittsabschnitt (4) angeordnet ist, und wobei innerhalb der Führungsleiste (1) ein Seitenkanal (31) mit einem ersten Seitenkanalöffnungsabschnitt (31a) und einem zweiten Seitenkanalöffnungsabschnitt (31b) angeordnet ist, wobei der erste Seitenkanalöffnungsabschnitt (31a) derart in der Kontaktfläche (22) angeordnet ist, um mit der Fluidkanalöffnung (02a) verbunden zu sein, und wobei der zweite Seitenkanalöffnungsabschnitt (31b) an einem Seitenabschnitt (4a) des Austrittsabschnitts (4) angeordnet ist.

2. Zerspanungswerkzeug (0) nach Anspruch 1, wobei der Seitenabschnitt (4a) zwischen 10 % und 50 % des Austrittsabschnitts (4) einnimmt.

3. Zerspanungswerkzeug (0) nach Anspruch 1 oder 2, wobei der Seitenabschnitt (4a) an einer Randkontur (4b) des Austrittsabschnitts (4) angeordnet ist.

4. Zerspanungswerkzeug (0) nach einem der vorangehenden Ansprüche, wobei der Seitenkanal (31) in einem Winkel in einem Bereich zwischen 30° und 60° zur Reibfläche (21) steht.

5. Zerspanungswerkzeug (0) nach einem der vorangehenden Ansprüche, wobei innerhalb der Führungsleiste (1) ein Mittelkanal (32) mit einem ersten Mittelkanalöffnungsabschnitt (32a) und einem zweiten Mittelkanalöffnungsabschnitt (32b) angeordnet ist, wobei der erste Mittelkanalöffnungsabschnitt (32a) derart in der Kontaktfläche (22) angeordnet ist, um mit der Fluidkanalöffnung (02a) verbunden zu sein, und wobei der zweite Mittelkanalöffnungsabschnitt (32b) an einem Mittelabschnitt (4c) des Austrittsabschnitts (4) angeordnet ist.

6. Zerspanungswerkzeug (0) nach Anspruch 5, wobei der Mittelabschnitt (4c) zwischen 10 % und 50 % des Austrittsabschnitts (4) einnimmt.

7. Zerspanungswerkzeug (0) nach einem der Ansprüche 5 oder 6, wobei der erste Seitenkanalöffnungsabschnitt (31a) und der erste Mittelkanalöffnungsabschnitt (32a) identisch sind.

8. Zerspanungswerkzeug (0) nach einem der vorangehenden Ansprüche, wobei der Austrittsabschnitt (4) derart ausgebildet, um zwischen 10 % und 90 % der Reibfläche (21) auszunehmen.

9. Zerspanungswerkzeug (0) nach einem der vorangehenden Ansprüche, wobei die Reibfläche (21) derart ausgebildet ist, um den Austrittsabschnitt (4) vollständig zu umranden.

10. Zerspanungswerkzeug (0) nach einem der vorangehenden Ansprüche, wobei der Austrittsabschnitt (4) eine sich in Richtung der Reibfläche (21) vergrößernde Querschnittsfläche aufweist.

11. Zerspanungswerkzeug (0) nach einem der vorangehenden Ansprüche, wobei der Austrittsabschnitt (4) eine Form entsprechend einem zur Reibfläche (21) hin geöffneten Trog aufweist.

12. Zerspanungswerkzeug (0) nach einem der vorangehenden Ansprüche, wobei der Austrittsabschnitt (4) in einem senkrecht zur Reibfläche (21) stehendem Querschnitt eine kreissegment-förmige Querschnittskontur (33) aufweist.

13. Zerspanungswerkzeug (0) nach einem der vorangehenden Ansprüche, wobei der Austrittsabschnitt (4) Wandabschnitte (41, 42, 43, 44) umfasst, welche Wandabschnitte (41, 42, 43, 44) in einem Winkel zwischen 10° und 90° zur Reibfläche (21) stehen.

14. Zerspanungswerkzeug (0) nach einem der vorangehenden Ansprüche, wobei die Führungsleiste (1) polykristallinen Diamant (PKD) und/oder kubisch kristallines Bornitrid (CBN) und/oder Vollhartmetall (VHM) und/oder Cermet umfasst.
